# EUROPÄISCHE PATENTSCHRIFT

(11) **EP 0 729 025 B1**
(45) Veröffentlichungstag und Bekanntmachung des Hinweises auf die Patenterteilung: **05.12.2001**
(21) Anmeldenummer: 96101634.2
(22) Anmeldetag: 06.02.1996
(51) Int. Cl.: G01N 21/89, G01N 21/88, G01N 21/84

(54) **Vorrichtung zur Fehlerkennung an transparenten Kunststofftafeln**
Facility for error detection on transparent plastic sheets
Dispositif pour la détection d'erreurs en tables de matière synthétique

(30) Priorität: 15.02.1995 DE 29502456 U
(43) Veröffentlichungstag der Anmeldung: 28.08.1996
(73) Patentinhaber: Röhm GmbH & Co. KG, 64293 Darmstadt (DE)
(72) Erfinder: Arnold, Wolfgang, D-64625 Bensheim (DE)

(56) Entgegenhaltungen:
- DE-A- 1 473 740
- DE-A- 2 653 330
- DE-A- 2 746 808
- DE-A- 2 828 480
- DE-B- 1 122 284
- DE-U- 9 104 596
- US-A- 5 243 402

## Beschreibung

### Gebiet der Erfindung

Die Erfindung betrifft ein optoelektronisches System zur gleichzeitigen quantitativen Analyse von lichtabsorbierenden und lichtablenkenden optischen Defekten in Halbzeugen aus transparenten Kunststoffen, insbesondere in extrudierten Halbzeugen aus transparenten Kunststoffen.

### Stand der Technik

Bei vielen Anwendungen von Halbzeugen aus transparenten Kunststoffen, wie beispielsweise Platten oder Folien, besteht die Forderung nach hoher optischer Qualität, sowohl an der Oberfläche als auch im Halbzeugkern. Die optische Qualität hat beispielsweise bei optischen Speichern, wie Video- und CD-Platten, die meistens aus Folien, bestehend aus Polymethylmethacrylat oder aus Polycarbonat, gewonnen werden, große Bedeutung.
Optische Defekte, die an Halbzeugen aus transparenten Kunststoffen auftreten können, sind beispielsweise: Welligkeit, Schlieren, Pickel, Narben, Löcher, Stellen mit schwankender Brechzahl oder allgemein Einschlüsse von Fremdpartikeln im Halbzeugkern und an der Halbzeugoberfläche sowie lokale Unebenheiten der Halbzeugoberfläche.

Eine Möglichkeit zur Kontrolle der optischen Qualität von extrudierten transparenten Kunststoffen, beispielsweise in Folien-oder Plattenform, stellt die direkte Durchleuchtung der Halbzeuge mit Laserscannern dar. Allerdings müssen auch bei der Laserscann-Methode separate Detektionsvorrichtungen für lichtabsorbierende Teilchen einerseits und lichtablenkenden Teilchen andererseits angewendet werden.

Als zuverlässige Methode zur Erkennung von Fehlern in Halbzeugen hat sich deren Durchleuchtung mit einer Punktlichtquelle und Projektion des dabei auftretenden Schattenbilds auf eine davor angebrachte Beobachungswand erwiesen. Die Erfassung von Größe und Anzahl der im Schattenbild sichtbaren, punktförmigen Fehlstellen wird visuell oder photographisch durchgeführt und ist damit sehr zeitintensiv.

In DE-U-91 04 596.7 wird eine Vorrichtung zur optischen Qualitätsüberprüfung von transparenten Kunststoffen beschrieben mit der eine schnelle, zuverlässige und automatische Fehlerkennung möglich ist und die für ein Verfahren zur In-line-Kontrolle von extrudierten, transparenten Kunststoff-Halbzeugen, wie Folien oder Platten geeignet ist. Im wesentlichen weist eine solche Vorrichtung eine Punktlichtquelle zur Durchstrahlung des KunststoffHalbzeugs auf, die zur Erzeugung eines kegelförmigen Lichtsegments in veränderlichem Abstand zur Objektebene verwendet wird, eine positionsvariable Projektionsfläche sowie eine CCD (Charge Coupled Device)-Kamera zur Aufnahme der auf der Projektionsfläche erzeugten Schattenbilder, wobei die in der CCD-Kamera gebildeten elektronischen Impulse zu einem Auswertesystem und gegebenenfalls auf einen Monitor übertragen werden. Auch mit einer solchen Vorrichtung ist jedoch die gleichzeitige Unterscheidung von absorbierenden und lichtablenkenden Fehlstellen nicht möglich.

### Aufgabe und Lösung

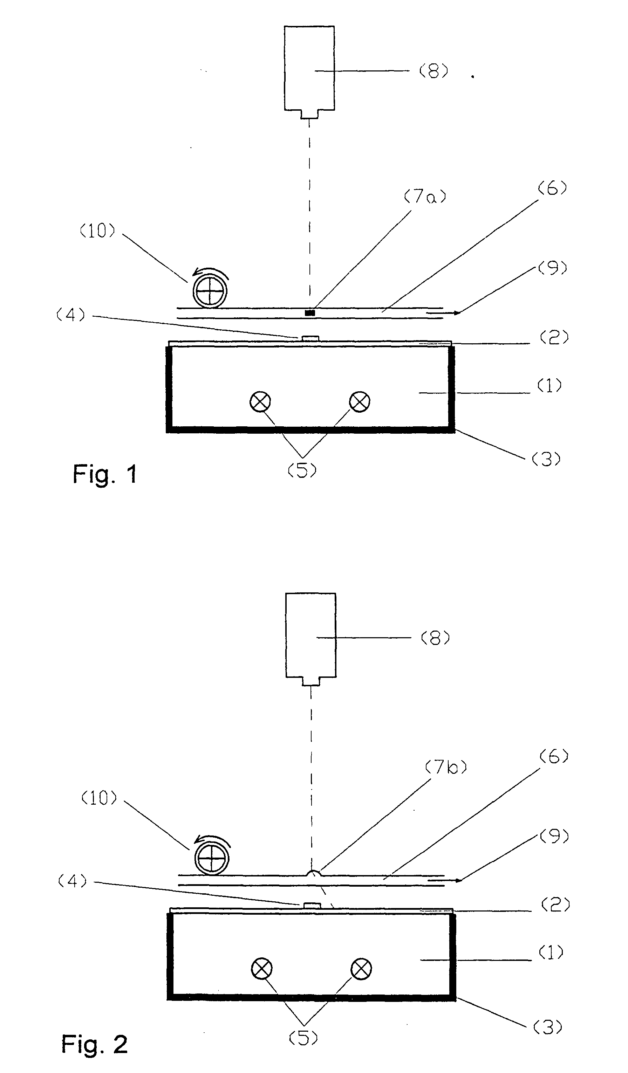

Als Aufgabe für die vorliegende Erfindung resultierte somit die Entwicklung einer Vorrichtung zur optischen Qulitätsüberprüfung von transparenten Kunststoff-Halbzeugen, insbesondere geeignet für eine In-line-Kontrolle von extrudierten Folien oder Platten, mit der sowohl lichtabsorbierende als auch lichtstreuende Fehlstellen gleichzeitig detektiert, lokalisiert und unterschieden werden können. Mit der in Fig. 1 dargestellten erfindungsgemäßen Vorrichtung kann diese Aufgabe überraschend einfach gelöst werden.
Die Vorrichtung umfaßt eine Beleuchtungseinrichtung (1) aufgebaut aus einem Gehäuse (3) enthaltend mindestens einen Leuchtkörper (5), wobei die dem zu beleuchtenden Halbzeug zugewandte Seite des Gehäuses aus einer Streuscheibe (2) besteht, die eine gleichmäßige Lichtintensität in der Beleuchtungseinrichtung (1) erzeugt. Auf der Streuscheibe (2) ist quer zur Vorschubrichtung (9) des zu prüfenden transparenten Materials (6) ein Streifen (4) aus einem Material angeordnet, das die Lichtintensität der Beleuchtungseinrichtung (1) abschwächt. Über die Beleuchtungseinrichtung (1) wird das zu prüfende transparente Material (6), insbesondere Folien- oder Plattenbahnen mit Vorschubgeschwindigkeiten von vorzugsweise zwischen 0,1 und 10 m/Minute bewegt. Über dem Material (6) ist auf der Höhe des Streifens (4) eine CCD (Charge Coupled Device)-Kamera (8) angeordnet, durch deren Objektiv die Linie des transparentes Materials (6) abgebildet wird, deren senkrechte Projektion auf den Streifen (4) der Beleuchtungseinrichtung (1) fällt. Die Linie wird auf einem Zeilensensor mit mindestens 1000 Bildpunkten abgebildet, wobei an jedem Bildpunkt die Lichtintensität gemessen wird. Passiert nun eine lichtabsorbierende Fehlstelle Fig. 1 (7a) diese Linie, so fällt bei den entsprechenden Bildpunkten im Zeilensensor die Lichtintensität unter einen gewissen Schwellenwert ab und ein Signal S1 wird registriert. Die gesamte Sensorzeile wird mit einer Frequenz von mindestens 1 KHz ausgelesen, womit die Auflösung A₂ der Bildpunkte parallel zur Richtung des Vorschubs (9) bei einer Vorschubgeschwindigkeit von beispielsweise 6 m/Minute mindestens A₁ = 0,1 mm beträgt. Die Auflösung A₂ der Bildpunkte quer zur Vorschubrichtung ist abhängig von der Breite des zu prüfenden Materials (6), insbesondere der Folien- oder Plattenbahn: Bei einer Breite von 500 mm und einem Zeilensensor mit 5000 Bildpunkten, beispielsweise, beträgt die Auflösung A₂ 0,1 mm.

Wenn eine lichtbrechende Fehlstelle (Fig. 2, 7b) den Streifen (4) der Beleuchtungseinrichtung (1) passiert, so steigt bei den entsprechenden Bildpunkten im Zeilensensor die Lichtintensität über einen gewissen Schwellenwert an, aufgrund der Einkopplung von Licht aus der Beleuchtungseinheit (1), das nicht
durch den Streifen (4) abgeschwächt wird. Damit wird im Zeilensensor der CCD-Kamera (8) ein, im Vergleich zum durch Lichtabsorption (7a) erzeugten Signal S1 entgegengesetztes, Signal S2 erzeugt. Beide Signalarten S1 und S2 werden vom Zeilensensor differenziert erfaßt. Damit wird es erstmals möglich, bei lichtbrechenden und lichtabsorbierenden Fehlstellen gleichzeitig die Ortskoordinaten sowie die Größe und Art zu erfassen.

### Durchführung der Erfindung

### Die Bestandteile des Fehlerkennungssystems

Die Beleuchtungseinrichtung (Fig. 1, 1) ist aus einem Gehäuse (3) aufgebaut, das mindestens einen Leuchtkörper (5) als Lichtquelle enthält. Nach oben zum zu prüfenden Material (6) hin ist das Gehäuse mit einer Streuscheibe (2) abgeschlossen, die für eine gleichmäßige Intensität des das zu prüfende Material (6) durchstrahlenden Lichts sorgt.

Die Leuchtkörper (5) sind vorzugsweise Leuchtstofflampen mit röhrenförmiger Geometrie, die, wenn, wie besonders bevorzugt, mehrere Leuchtkörper (5) verwendet werden, parallel zueinander quer zur Extrusionsrichtung im Gehäuse (3) angebracht sind.
Die Streuscheibe (2), die das Gehäuse (3) abschließt und die sich zwischen den Leuchtkörpern (5) und dem transparenten Material (6) befindet, besteht aus einem transparenten Material mit eingelagerten Streuteilchen. Um eine hohe Gleichmäßigkeit in der Ausleuchtung der Streuscheiben (2) zu erzielen, werden vorzugsweise solche Streuteilchen verwendet, die aufgrund eines vom Matrixmaterial der Streuscheibe (2) stark abweichenden Brechungsindex zu hohen Reflexionsgraden und damit niedrigen Transmissionsgraden führen und die, durch eine scharfe Phasengrenze zwischen Streuteilchen und Matrixmaterial bedingt, eine geringe Lichtabsorption bewirken. Besonders bevorzugt werden transparente Kunststoffe als Matrixmaterialien für die Streuscheiben (2) verwendet, in die Kunststoffteilchen mit kugelförmiger Geometrie und einem Brechungsindex, der mindestens um 0,05 Einheiten von dem des Matrixmaterials abweicht, eingelagert sind. Dabei weisen solche Kunststoffteilchen vorzugsweise eine einheitliche Größe auf.

Auf der zum prüfenden Material (6) hingewandten Seite der Streuscheibe (2) ist ein Streifen (4) aus einem Material angebracht, das die Intensität des Lichts aus der Beleuchtungseinrichtung (1) abschwächt. Vorzugsweise befindet sich der Streifen auf einer farblosen, transparenten Folie, die eine bessere Justierung des Streifens (4) zwischen Beleuchtungseinrichtung (1) und CCD-Kamera (8) ermöglicht. Weiterhin bevorzugt ist der Streifen (4) ebenfalls aus einer Kunststoff-Folie aufgebaut, die besonders bevorzugt einen Farbstoff enthält. Die Geschwindigkeit des Vorschubs (9) des zu prüfenden transparenten Materials (6) wird im allgemeinen bei der Folien- und Plattenprüfung durch die Extrusionsgeschwindigkeit vorgegeben und durch einen Weggeber (10) erfaßt, der am Rand der Prüfstrecke angebracht ist. Der Weggeber (10) ist vorzugsweise ein Inkrementalweggeber, der als Meßeinrichtung ein Laufrad besitzt, das auf der Bahn des zu prüfenden Materials (6) aufliegt, und der mindestens einen Impuls pro mm Vorschub (9) auslöst. Dieser Impuls wird an die CCD-Kamera (8) weitergegeben, die mit einem speziellen Programm, die Impulse in die Geschwindigkeit des Vorschubs (9) umrechnet.

Die CCD-Kamera (8) erfaßt eine quer zur Richtung des Vorschubs (9) laufende Linie über die gesamte Breite des zu prüfenden Materials (6), vorzugsweise über die Breite der extrudierten Folie oder Platte. Über das Objektiv der CCD-Kamera (8) wird diese Linie auf deren Zeilensensor mit mindestens 1000 Bildpunkten abgebildet, wobei an jedem Bildpunkt die Lichtintensität gemessen wird. Damit wird die Ortsauflösung quer zur Richtung des Vorschubs (9) durch die Breite des zu prüfenden Materials (6) und die Pixelanzahl des Sensors bestimmt. Die gesamte Sensorzeile der CCD-Kamera (8) wird mit einer Frequenz von mindestens 1 kHz ausgelesen, wodurch die Ortsauflösung der Bildpunkte parallel zur Richtung des Vorschubs bestimmt wird.

Die Linie, die auf den Zeilensensor der CCD-Kamera (8) abgebildet wird, liegt in der senkrechten Projektion von der CCD-Kamera (8) durch das zu prüfende Material (6) auf den Streifen (4) auf der Beleuchtungseinrichtung (1), der die Lichtintensität der Beleuchtungseinrichtung abschwächt. Die CCD-Kamera (8) ist mit entsprechenden Auswerteeinrichtungen, die die Fehlerkennung erfassen, wie beispielsweise mit Oszilloskopen sowie mit Datenverarbeitungsanlagen mit entsprechenden Speicher- und Editiereinrichtungen, verbunden.

### Das Funktionsprinzip der Erfindung

Das Funktionsprinzip der erfindungsgemäßen Vorrichtung wird beispielhaft an der Fehlerkennung bei extrudierten Folien oder Platten als zu prüfendem Material (6) aufgezeigt. Nachdem die Folie oder Platte die Kalandriervorrichtung der Extrusionsanlage verlassen hat und auf Temperaturen deutlich unter der Erweichungstemperatur des zu prüfenden Materials (6) abgekühlt ist, wird sie mit einem Vorschub (9), der vorzugsweise im Geschwindigkeitsbereich zwischen 0,1 m/Minute und 10 m/Minute liegt, zwischen CCD-Kamera (8) und Streuscheibe (2) mit aufliegendem Streifen (4) hindurchgeführt.
Passiert nun eine lichtabsorbierende Fehlstelle (Fig. 1, 7a) den Streifen (4) und die darauf abgebildete Sensorlinie, so fällt bei den entsprechenden Bildpunkten (Pixeln) im Zeilensensor die Lichtintensität unter einen bestimmten Schwellenwert ab und ein Signal S1 wird in der Auswerteeinrichtung registriert. Entsprechend der Größe der Fehlstelle werden mehrere Signale S1 registriert, die diese Größe wiedergeben. Dabei resultiert für die Bildauflösung beispielhaft bei einem Zeilensensor mit 5000 Bildpunkten, einer Auslesefrequenz von 2 KHz, einer Vorschubgeschwindigkeit von 1,2 m/Minute und einer Extrudatbreite von 500 mm: die Bildauflösung A₁ quer zur Extrusionsrichtung beträgt 500 mm / 5000 Bildpunkte = 0,1 mm pro Bildpunkt = A₁, die Bildauflösung A₂ parallel zur Extrusionsrichtung beträgt 1200 mm. Minute⁻¹ Vorschubgeschwindigkeit / 120.000 Minute⁻¹ Auslesefrequenz der Sensorzeile (= Bildpunkte in Längsrichtung) = 0,01 mm pro Bildpunkt = A₂. Mit einer solchen Bildauflösung werden eingeschlossene lichtabsorbierende Fehlstellen, wie beispielsweise Crack- oder Schmutzpartikel, in Größe und Geometrie hervorragend erfaßt.

Wenn eine lichtbrechende Fehlstelle (Fig. 2, 7b) den Streifen (4) und die darauf abgebildete Sensorlinie passiert, so steigt bei den entsprechenden Bildpunkten (Pixeln) im Zeilensensor die Lichtintensität über einen gewissen Schwellenwert an, aufgrund der Einkopplung von Licht aus der Beleuchtungseinrichtung (1), das nicht durch den Streifen (4) abgeschwächt ist. Damit wird ein Signal S2 in der Auswerteeinrichtung registriert, das sich vom durch Lichtabsorption an Fehlstellen (7a) erzeugten Signal S1 deutlich unterscheidet.
Beide Signalarten S1 und S2 werden vom Zeilensensor differenziert erfaßt, womit es möglich wird, bei lichtabsorbierenden Fehlstellen (7a) und lichtbrechenden Fehlstellen gleichzeitig die Ortskoordinaten sowie die Größe und Art zu erfassen.
Der Zeilensensor der CCD-Kamera liefert je Bildpunkt ein von der Beleuchtungsintensität abhängiges elektrisches Signal. In der bevorzugt verwendeten Auswerteeinrichtung werden alle Signale in einem analogen Schieberegister angelegt und mit einer Frequenz von beispielsweise 2 KHz ausgelesen, woraus eine von der Intensitätsverteilung des das zu prüfende Material (6) passierenden Lichts geprägte mit 2 KHz getaktete Videokurve resultiert. Nach einer Digitalisierung der Videokurve in 8-Bit-Grauwerte wird diese in nachfolgenden Komparatoren mit je einer unteren und einer oberen Schwellenwertfunktion verglichen. Über- oder unterschreitet die Videokurve diese Schwellenwertfunktion aufgrund lichtstreuender Fehlstellen (7b) oder lichtabsorbierender Fehlstellen (7a), dann wird die betreffende Videokurve mit Scan-Nummer im Fehlerspeicher abgelegt. Videokurve und Schwellenwertfunktionen können digital zu Datenverarbeitungsanlagen übertragen und auf einem Monitor dargestellt werden.

## Patentansprüche

1. Vorrichtung zur optischen Qualitätsüberprüfung von transparenten Kunststoffhalbzeugen (Fig. 1, 6), bestehend aus einer Beleuchtungseinrichtung (1) und einer CCD-Kamera (8), zwischen denen die Kunststoffhalbzeuge (6) angeordnet sind,
**dadurch gekennzeichnet,**
**daß** die Beleuchtungseinrichtung (1) auf der dem zu prüfenden Kunststoffhalbzeug (6) zugewandten Seite eine Streuscheibe (2) aufweist, auf der ein Streifen (4) aus einem Material, das die Lichtintensität der Beleuchtungseinrichtung (1) abschwächt, angebracht ist, wobei der Streifen (4) das Beobachtungsfeld des Zeilensensors der CCD-Kamera (8) vollständig abdeckt, so daß gleichzeitig lichtabsorbierende und lichtablenkende Fehlstellen im Halbzeug lokalisiert sowie in Größe und Art erfaßt werden können .

2. Vorrichtung gemäß Anspruch 1, **dadurch gekennzeichnet, daß** das Material, aus dem der Streifen (4) aufgebaut ist, aus einem transparenten Kunststoff und einem darin enthaltenen Farbstoff mit Absorptionsmaximum im Bereich des sichtbaren Lichts besteht.

3. Vorrichtung gemäß den Ansprüchen 1 und 2, **dadurch gekennzeichnet, daß** das zu prüfende Kunststoffhalbzeug (6) als extrudierte Folien- oder Plattenbahn kontinuierlich zwischen Beleuchtungseinrichtung (1) und CCD-Kamera (8) hindurch bewegt wird.

4. Vorrichtung gemäß den Ansprüchen 1 bis 3, **dadurch gekennzeichnet, daß** die Sensorzeile der CCD-Kamera (8) mindestens 1000 Bildpunkte aufweist, in die die Breite des zu prüfenden Kunststoffhalbzeugs (6) quer zur Bewegungsrichtung aufgelöst wird.

5. Vorrichtung gemäß den Ansprüchen 1 bis 4, **dadurch gekennzeichnet, daß** die Sensorzeile der CCD-Kamera (8) mit einer Frequenz von mindestens 1 KHz ausgelesen wird.

## Claims

1. An apparatus for optical quality examination of transparent plastic semi-finished products (Figs. 1 - 6), comprising a lighting apparatus (1) and a CCD camera (8), between which the plastic semi-finished products (6) are disposed, **characterised in that** the lighting apparatus (1) has a scatter disc (2) on the side facing the plastic semi-finished product (6) which is to be examined on which is disposed a strip (4) of a material which reduces the light intensity of the lighting apparatus (1), wherein the strip (4) completely covers the observation field of the line sensor of the CCD camera (8) so that light-absorbent and light-reflective flaws in the semi-finished product can be simultaneously localised and their size & manner recorded.

2. An apparatus according to claim 1, **characterised in that** the material from which the strip (4) is made comprises a transparent plastic and a colorant disposed therein with an absorption maximum in the range of visible light.

3. An apparatus according to claims 1 and 2, **characterised in that** the plastic semi-finished product (6) which is to be examined is moved continually through between the lighting apparatus (1) and the CCD camera (8) as an extruded foil or sheet.

4. An apparatus according to claims 1 to 3, **characterised in that** the sensor line of the CCD camera (8) has at least 1000 pixels in which the breadth of the plastic semi-finished product (6) which is to be examined is analysed transversely to the direction of travel.

5. An apparatus according to claims 1 to 4, **characterised in that** the sensor line of the CCD camera (8) is read at a frequency of at least 1 KHz.

## Revendications

1. Dispositif de contrôle optique de la qualité de produits semi-finis en matière plastique transparente (6) (fig. 1) comprenant une installation d'éclairage (1) et une caméra CCD (8) entre lesquelles se trouve le produit semi-fini (6) en matière plastique,
**caractérisé en ce que**
l'installation d'éclairage (1) comporte sur son côté tourné vers le produit semi-fini en matière plastique (6) à contrôler, un panneau diffusant (2) muni d'une bande (4) d'une matière atténuant l'intensité lumineuse de l'installation d'éclairage (1),
la bande (4) recouvre complètement le champ d'observation du capteur linéaire de la caméra CCD (8) pour permettre de détecter simultanément les points défectueux absorbant la lumière et ceux diffractant la lumière dans le produit semi-fini pour les localiser et en déterminer la taille et la nature.

2. Dispositif selon la revendication 1,
**caractérisé en ce que**
la matière dans laquelle est faite la bande (4) consiste en une matière plastique transparente contenant un colorant avec un maximum d'absorption dans la plage de la lumière visible.

3. Dispositif selon les revendications 1 et 2,
**caractérisé en ce que**
le produit semi-fini en matière plastique à contrôler (6) est une bande de film ou une plaque extrudée, passant en continu entre l'installation d'éclairage (1) et la caméra CCD (8).

4. Dispositif selon l'une quelconque des revendications 1 à 3,
**caractérisé en ce que**
le capteur linéaire de la caméra CCD (8) comporte au moins 1000 points image pour recevoir la largeur du produit semi-fini en matière plastique (6) à contrôler, transversalement à la direction de déplacement.

5. Dispositif selon l'une quelconque des revendications 1 à 4,
**caractérisé en ce que**
le capteur linéaire de la caméra CCD (8) est balayé à une fréquence d'au moins 1 KHz.
